Europäisches Patentamt

European Patent Office

Office européen des brevets

(11) Numéro de publication: **0 468 118 A1**

## DEMANDE DE BREVET EUROPEEN

(21) Numéro de dépôt: 90402110.2

(22) Date de dépôt: 23.07.90

(51) Int. Cl.5: **C02F 1/68**, C02F 1/00, E04H 4/12

(43) Date de publication de la demande:
**29.01.92 Bulletin 92/05**

(84) Etats contractants désignés:
**AT BE CH DE ES FR GB GR IT LI LU NL SE**

(71) Demandeur: **SETRIC SA**
**Chemin des Monges, BP. No. 9**
**F-31450 Deyme(FR)**

(72) Inventeur: **Chelle, René**
**Setric SA, Chemin des Monges**
**31450 - Deyme(FR)**

(54) Dispositif, à immerger, pour libération de produits chimiques nécessaires au traitement des eaux de piscines permettant d'utiliser des produits soit incompatibles entre eux à forte concentration, soit compatibles mais à solubilités différentes.

(57) L'invention concerne un dispositif, à immerger, pour libération de produits chimiques nécessaires au traitement des eaux de piscines, permettant d'utiliser des produits, soit incompatibles entre eux à forte concentration, soit compatibles mais à solubilités différentes.

Il comprend des compartiments (au moins 2) sans communication entre eux, et à orifices séparés et réglables.

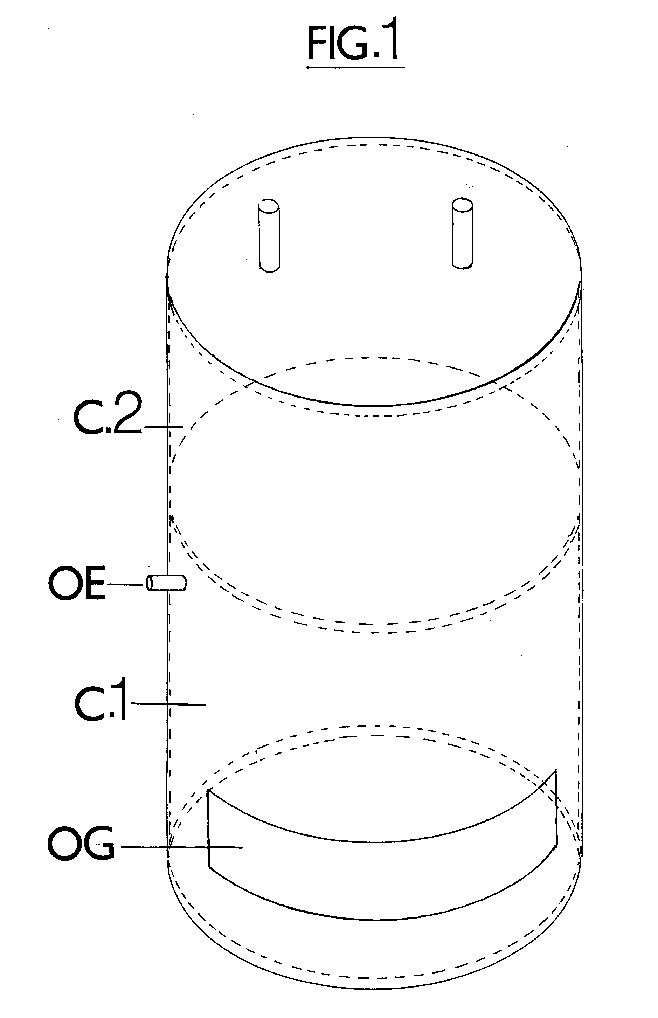

Pour le cas d'un dispositif à deux compartiments (figure 1) et pour deux produits incompatibles, le compartiment C1 reçoit par exemple des granulés d'acide trichloroisocyanurique retenus par une grille, le compartiment C2 l'autre produit, par exemple un ammonium quaternaire concentré.

A l'immersion, l'eau pénètre dans le compartiment C1 et en ressort chlorée. L'ammonium quaternaire, moins dense que l'eau, s'évade du compartiment C2. Les deux produits se retrouvent dilués et de ce fait compatibles. Les compartiments peuvent aussi être utilisés pour libérer des produits compatibles, mais ayant des solubilités différentes.

EP 0 468 118 A1

La présente invention concerne un dispositif libérant les produits nécessaires au traitement des eaux de piscine en permettant d'utiliser des produits soit incompatibles entre eux à forte concentration, soit compatibles mais à solubilités différentes.

Les produits utilisés pour le traitement des eaux de piscine sont nombreux et le même usager emploie des produits différents pour qu'ils assurent des fonctions différentes.

Les produits chlorés sont les plus employés. Ils ont, tous en commun, de générer dans l'eau de l'acide hypochloreux, molécule oxydante et désinfectante. Parmi ces produits, le dichloroisocyanurate de sodium et l'acide trichloroisocyanurique qui se présentent sous forme solide sont les plus utilisés. Ces deux composés du chlore ont des solubilités différentes : le dichloroisocyanurate de sodium ayant une solubilité élevée permet d'atteindre très vite le taux désiré de chlore dans le bassin et c'est pour cette propriété qu'il est utilisé dans les "chlorations" dites "de choc" ; l'acide trichloroisocyanurique possède une solubilité beaucoup plus faible et plus lente et il convient donc pour les traitement dits '"d'entretien" qui visent à maintenir le taux de chlore obtenu avec le traitement de choc.

Les produits algicides sont eux aussi très employés. Ils se présentent sous forme de solutions aqueuses à des concentrations d'environ 10 à 20 % d'ammonium quaternaire. Les ammoniums quaternaires et les produits chlorés sont incompatibles entre eux aux concentrations élevées. Pour éclairer ce point, nous précisons qu'il y a totale incompatibilité lorsqu'on mélange les produits chlorés et les ammoniums quaternaires tels qu'ils sont fabriqués (à 50 % environ d'ammonium quaternaire) ou tels qu'ils sont utilisés (10 à 20 % de matière active) dans les piscines. Il est donc exclu de trouver dans le commerce de tels mélanges. En l'état actuel, on est donc contraint de faire en deux opérations séparées le traitement au chlore et le traitement algicide.

D'autres produits que les produits chlorés et les produits algicides sont utilisés, et à d'autres fins. C'est le cas, par exemple, des produits floculants dont la fonction est de clarifier les eaux ayant perdu une limpidité, que ni les produits chlorés, ni les produits algicides ne permettent de restituer. Les produits floculants sont chimiquement compatibles avec le chlore, mais on ne peut les introduire dans la confection des galets (formes les plus commercialisées) des produits chlorés à moins d'accepter une fragilisation de ces galets. La présence de produits floculants, plus solubles que le constituant principal (l'acide trichloroisocyanurique), dans les galets détermine, en effet, un délitement trop rapide de ceux-ci, ce qui n'est pas souhaité.

A ne considérer que les produits cités ci-dessus, et qui sont incontestablement les plus utilisés, on est contraint, en l'état actuel, d'opérer séparément les trois opérations suivantes : traitement aux produits chlorés, traitement aux produits algicides, traitement aux produits floculants.

Le dispositif de libération de produits chimiques, présenté ici pour invention, permet d'effectuer en une seule opération les trois opérations citées ci-dessus pour une durée approximative de 10 à 30 jours. Il contient en des compartiments séparés et sans aucune communication, les produits incompatibles entre eux, ou compatibles mais avec des solubilités différentes. Les produits présents dans ces compartiments en sortent par des ouvertures séparées et séparément réglables. Un réglage convenable permet de faire sortir à une vitesse réglable les produits très solubles et ceux qui le sont moins.

Le dispositif présenté pour invention comprend plusieurs compartiments, au moins deux comme il est donné schématiquement dans la figure 1. Ces deux compartiments C1 et C2 peuvent être constitués soit d'une pièce unique (selon figure 1), soit de deux pièces qui peuvent être éventuellement désolidarisées (sans figure représentée). Dans ces deux cas, le dispositif est fait de matière rigide (par exemple en matière plastique). On peut prévoir pour le dispositif présenté pour invention, des formes et des contenances diverses.

Les compartiments sont munis d'orifices non fonctionnels avant l'usage du dispositif et qui deviennent fonctionnels au moment de l'utilisation. Le compartiment C1 contient des produits chlorés, à l'état solide, par exemple, des granulés d'acide trichloroisocyanurique. Dans ce compartiment sont prévus deux sortes d'orifices en un ou plusieurs exemplaires: orifices-évent OE et orifices OG munis d'une grille dont le maillage est conçu pour ne pas laisser s'échapper les granulés d'acide trichloroisocyanurique tels qu'ils sont fabriqués par l'industrie. La grille peut être, ou non doublée par une membrane perméable à l'eau et aux matières dissoutes. Les deux sortes d'orifices sont obturés avant l'usage. Au moment de l'immersion dans le bassin ou dans le skimmer, le compartiment C1 étant placé vers le bas, ils sont dégagés et on peut en les dégageant régler la surface utile d'échange de l'ouverture grillagée. L'eau pénètre dans le compartiment, dissout (les granulés d'acide trichloroisocyanurique étant peu solubles) une petite quantité de chlore comme il est souhaité, et ressort pour être conduite dans le bassin de la piscine. Quel que soit le débit réglé pour l'ouverture, l'eau à l'intérieur des compartiments se trouve à saturation d'acide trichloroisocyanurique ou très près de la saturation. En réglant la vitesse de circulation de l'eau à travers le compartiment, on règle donc le débit d'eau saturée en chlore qui ressort des compartiments.

Dans le compartiment C1 peut se trouver mélangé aux produits chlorés, un produit compatible avec eux, par exemple un floculant comme le sulfate d'alumine. Celui-ci a une solubilité beaucoup plus grande que celle de l'acide trichloroisocyanurique et il sortira donc beaucoup plus vite que ce dernier. Ceci n'est point gênant, car il n'est pas nécessaire, dans ce cas, de ralentir la sortie du floculant. Pour la même raison, on peut aussi faire que les produits chlorés soient constitués d'un mélange de dichloroisocyanurate de sodium à solubilité élevée et d'acide trichloroisocyanurique à faible solubilité.

Le compartiment C2 peut être utilisé selon deux fins : pour libérer un produit incompatible à forte concentration avec les produits chlorés du compartiment C1 ou pour libérer un produit beaucoup plus soluble que les produits chlorés et en ralentir la vitesse de sortie. Ce qui exclut de le placer dans le compartiment C1 même si ce produit est compatible avec ceux placés dans ce compartiment.

La libération d'un produit incompatible avec les produits chlorés à forte concentration est illustrée par un exemple, qui se situe dans le domaine du traitement algicide. Dans le compartiment C2 se trouve donc placé le produit algicide : l'ammonium quaternaire. On peut se permettre d'avoir dans ce compartiment, un ammonium quaternaire à la plus forte concentration (environ 50 % de matière active), c'est-à-dire à la concentration qui est celle issue de la synthèse de l'ammonium quaternaire par l'industrie de fabrication. Le compartiment C2 possède un ou plusieurs orifices obturés avant usage du dispositif. Ces orifices pourront être rendus fonctionnels, de façon indépendante les uns des autres, ce qui est une façon de pouvoir régler le débit. Ils sont situés dans la partie haute du compartiment. Au moment de l'immersion du dispositif présenté pour invention, le compartiment C2 étant placé vers le haut, les orifices seront ouverts, ce qui permettra à l'ammonium quaternaire de sortir. Cet algicide, quand il est fortement concentré, possède une densité nettement inférieure à l'eau ce qui a pour conséquence son ascension. Il s'échappe donc du compartiment avec une vitesse qui est fonction de la différence de densité. Le diamètre des orifices tient compte de cela et est tel qu'il assure la sortie de l'algicide pendant une durée préétablie. Pendant le fonctionnement du dispositif l'algicide (ammonium quaternaire) qui en sort se trouve fortement dilué dans l'eau extérieure, ce qui est recherché et il devient du fait de cette dilution compatible avec les concentrations observées pour le chlore dans cette même eau extérieure. Le dispositif présenté pour invention permet donc, sur cet exemple, de libérer pour traitement des eaux de piscines des produits incompatibles entre eux à forte concentration, et de faire en une seule opération, les trois opérations de traitement aux produits chlorés, de traitement aux floculants et de traitement antialgues. Il évite de plus certains inconvénients qu'on observe pour chacune des trois opérations de traitement faite séparément.

Pour le traitement d'entretien aux produits chlorés, il est actuellement fait appel essentiellement à des formes d'acide trichloroisocyanurique dites "pastillées", dont le poids peut aller de 10 à 600 grammes. Les présentations pastillées, dont le poids est égal ou supérieur à 100 g, sont dites "en galets". Ces galets sont placés directement dans le panier du skimmer, où l'eau se déverse pour être conduite vers le filtre avant de retourner au bassin. L'eau dissout progressivement et lentement l'acide trichloroisocyanurique dont ils sont faits. On peut aussi placer les galets dans des appareils dits "chlorinateurs" où l'eau opère son action dissolvante, le débit de l'eau pouvant être réglé par un jeu de vannes. Dans l'un et l'autre cas, l'utilisation des galets présente l'inconvénient suivant : la surface d'échange eau-galet ne cesse de diminuer au fur et à mesure de "l'usure" de celui-ci, ce qui se traduit par une diminution de concentration d'acide hypochloreux ; c'est d'ailleurs pour cela qu'il est habituellement conseillé d'ajouter de nouveaux galets quand les anciens sont réduits à environ le quart de leur volume. De plus la confection des galets fait appel à des substances lubrifiantes qui entrent dans leur composition. Ces substances, comme l'acide stéarique ou le stéarate de sodium sont par définition insolubles dans l'eau, ce qui ne les empêche pas d'être entraînées vers le filtre qu'elles contribuent à colmater et vers la piscine où elles peuvent être responsables de salissures sur la ligne de flottaison et en surface de l'eau. Enfin, la confection des galets entraîne un supplément de coût par rapport au coût des granulés d'acide trichloroisocyanurique à partir desquels ils sont faits. De plus, le dispositif présenté pour invention est jetable en fin d'usage, car il est conçu comme un emballage des produits qu'il contient et qui, de toute façon auraient dû être emballés pour les usagers. On comprend donc que son coût est sans commune mesure avec les "chlorinateurs" qui nécessitent une dérivation des conduits de l'eau et qui fonctionnent sous pression, celle ci étant imposée par le circuit de filtration.

Le dispositif présenté pour invention peut se placer sous la grille du skimmer, destinée à retenir les feuilles et autres débris végétaux. On peut donc enlever le skimmer pour le nettoyer sans avoir le contact avec les produits chlorés, ce qui n'est pas le cas quand on place les galets dans le skimmer, où se trouvent également les feuilles recueillies.

Pour l'opération du traitement aux produits algicides, on opère actuellement en disposant en surface de l'eau une solution d'ammonium quaternaire dont la concentration ne peut être supérieure à 20 % de matière active et ceci pour deux raisons : la première réside dans le fait que la matière issue de la synthèse des ammoniums quaternaires, étant à une concentration de 50 %, elle est trop visqueuse pour être dispersée correctement ; la deuxième est liée à la causticité des ammoniums quaternaires concentrés qui expose l'usager à des dangers. Nous précisons que l'ammonium quaternaire algicide est placé, dès la confection du dispositif, dans le compartiment C2. Il s'y trouve à la concentration de 50 % de matière active et l'usager n'aura pas de contact avec lui. De plus, c'est à cette concentration que le produit a la plus faible densité, ce qui permet son meilleur échappement du compartiment quand, après immersion, les ouvertures deviennent fonctionnelles.

Il a été dit plus haut, que le dispositif peut être utilisé à deux fins : pour libérer un produit incompatible avec des produits placés dans le compartiment C1, comme nous venons d'en donner un exemple pour le traitement algicide ; et pour libérer des produits beaucoup plus solubles que ceux du compartiment C1 quand on veut en ralentir la sortie. Dans ce dernier cas, on peut citer l'utilisation des produits correcteurs de pH, qu'ils soient liquides ou solides, de produits dits détartrants, de produits bromés, ou encore de produits chlorés à dissolution élevée comme le dichloroisocyanurate de sodium. Ces produits s'évaderont des compartiments selon le réglage qu'on aura fait de l'ouverture.

Le dispositif présenté pour invention peut être conçu avec deux compartiments non séparables ou au contraire avec deux compartiments que l'on peut désolidariser avec les intérêts que cela peut représenter dans ce dernier cas, par exemple : le besoin d'avoir un seul traitement, ou la nécessité de traiter l'installation en deux points séparés.

Le dispositif est conçu pour être jetable, mais il n'est point exclu, pour l'usager, de le recharger ou de le faire recharger.

**Revendications**

1. Dispositif, à immerger, pour libération de produits chimiques nécessaires au traitement des eaux de piscine caractérisé par le fait qu'il permet d'utiliser des produits soit incompatibles entre eux à forte concentration, soit compatibles mais ayant des solubilités différentes.

2. Dispositif, à immerger, pour libération de produits chimiques nécessaires au traitement des eaux de piscine, selon revendication 1, caractérisé par le fait qu'il est constitué de compartiments, de nombre égal ou supérieur à deux, sans communication entre eux et dans lesquels sont séparés les produits incompatibles ou les produits compatibles mais à solubilités différentes.

3. Dispositif, à immerger, pour libération de produits chimiques nécessaires au traitement des eaux de piscine, selon revendications 1 et 2, caractérisé par le fait qu'il libère séparément les produits incompatibles entre eux à forte concentration par des ouvertures indépendantes dont les réglages sont également indépendants, permettant ainsi aux produits de se retrouver dans l'eau de la piscine et par le fait de la dilution, à des concentrations où il n'y a plus d'incompatibilité entre eux.

4. Dispositif, à immerger, pour libération de produits chimiques nécessaires au traitement des eaux de piscine, selon revendication 1 à 3, qui permet par exemple d'utiliser pour la chloration de l'eau des granulés d'acide trichloroisocyanurique placés dans le compartiment C1, dont l'ouverture est munie d'une grille dont le maillage interdit la sortie des granulés avant leur dissolution et pour le traitement algicide, l'ammonium quaternaire à forte concentration dans le compartiment C1, dont il s'évade par effet de la différence de densité avec l'eau, grâce à des ouvertures situées dans la partie haute du compartiment.

5. Dispositif, à immerger, pour libération de produits chimiques nécessaires au traitement des eaux de piscine, selon revendications 1 et 2, caractérisé par le fait qu'il permet de libérer à des vitesses contrôlables par des ouvertures réglables des produits compatibles, mais possédant des solubilités différentes en les plaçant dans des compartiments séparés.

6. Dispositif, à immerger, pour libération de produits chimiques nécessaires au traitement des eaux de piscine, selon revendication 2, caractérisé par le fait que les différents compartiments peuvent ou non être désolidarisés.

7. Dispositif, à immerger, pour libération de produits chimiques nécessaires au traitement des eaux de piscine, selon revendication 6, caractérisé par le fait qu'il permet quand cela est souhaité de n'utiliser qu'un compartiment ou d'utiliser séparément les différents compartiments en différents lieux de l'installation.

8. Dispositif, à immerger, pour libération de produits chimiques nécessaires au traitement des eaux de piscine, selon revendications 1 et 2, caractérisé par le fait que conçu comme emballage des produits qu'il contient, il peut être jeté, ou éventuellement rechargé.

# FIG.1

**Office européen des brevets**

# RAPPORT DE RECHERCHE EUROPEENNE

Numéro de la demande

## EP 90 40 2110

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 159 060  (THE PROCTER & GAMBLE COMPANY) <br> * page 10, ligne 18 - page 11, ligne 13; figure 1 * <br> – – – | 1-3 | C 02 F 1/68 <br> C 02 F 1/00 <br> E 04 H 4/12 |
| A | US-A-3 357 563  (M.C.SICARD) <br> * le document en entier * <br> – – – – – | 1,2,7 | |

**DOMAINES TECHNIQUES RECHERCHES (Int. Cl.5)**

C 02 F
E 04 H

Le présent rapport de recherche a été établi pour toutes les revendications

| Lieu de la recherche | Date d'achèvement de la recherche | Examinateur |
|---|---|---|
| La Haye | 02 avril 91 | GONZALEZ ARIAS M.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
 
& : membre de la même famille, document correspondant